# EUROPÄISCHE PATENTSCHRIFT

(11) **EP 3 161 812 B1**
(45) Veröffentlichungstag und Bekanntmachung des Hinweises auf die Patenterteilung: **14.07.2021**
(21) Anmeldenummer: 15724614.1
(22) Anmeldetag: 21.05.2015
(51) Int. Cl.: G08G 1/16, B60T 7/12, B62D 15/02, B60Q 1/52, B60W 30/09

(54) **VERFAHREN UND VORRICHTUNG ZUM BETREIBEN EINES FAHRZEUGS**
METHOD AND DEVICE FOR OPERATING A VEHICLE
PROCÉDÉ ET DISPOSITIF POUR FAIRE FONCTIONNER UN VÉHICULE

(30) Priorität: 24.06.2014 DE 102014212047
(43) Veröffentlichungstag der Anmeldung: 03.05.2017
(73) Patentinhaber: Robert Bosch GmbH, 70442 Stuttgart (DE)
(72) Erfinder: KUPKA, Bjoern, 71701 Schwieberdingen (DE)
(86) Internationale Anmeldenummer: PCT/EP2015/061205
(87) Internationale Veröffentlichungsnummer: WO 2015/197270

(56) Entgegenhaltungen:
- DE-A1-102006 010 275
- DE-A1-102006 044 179
- DE-A1-102011 080 789
- DE-A1-102012 108 563
- DE-A1-102012 215 952
- None

## Beschreibung

Die Erfindung betrifft ein Verfahren zum Betreiben eines Fahrzeugs. Die Erfindung betrifft ferner eine Vorrichtung zum Betreiben eines Fahrzeugs sowie ein Computerprogramm.

### Stand der Technik

Spurhaltesysteme für ein Fahrzeug sind als solche bekannt. In der Regel sind sie in der Lage, ein Fahrzeug in einer vorgegebenen Fahrspur zu halten. Dies insbesondere mittels eines Eingriffs in ein Lenksystem des Fahrzeugs.

Die Offenlegungsschrift DE 10 2006 010275 A1 zeigt Verfahren und eine Vorrichtung zum Vermeiden einer Kollision bei einem Spurwechsel eines Fahrzeugs.

Die Offenlegungsschrift DE 10 2006 044 179 A1 zeigt ein Verfahren und eine Vorrichtung zum Unterstützen eines Fahrers eines Kraftfahrzeugs bei der Durchführung eines Fahrmanövers.

Die Offenlegungsschrift DE 10 2012 215 952 A1 zeigt ein Verfahren und eine Vorrichtung zur frühzeitigen Warnung anderer Verkehrsteilnehmer.

Die Offenlegungsschrift DE 10 2011 080 789 A1 zeigt ein Verfahren und ein System zur Regelung der Fahrstabilität.

Die Offenlegungsschrift DE 10 2012 108 563 A1 zeigt ein Verfahren und eine Vorrichtung zur Kollisionsvermeidung bei Fahrstreifenwechseln.

### Offenbarung der Erfindung

Die der Erfindung zugrunde liegende Aufgabe kann darin gesehen werden, ein Verfahren zum Betreiben eines Fahrzeugs bereitzustellen.

Die der Erfindung zugrunde liegende Aufgabe kann des Weiteren darin gesehen werden, eine Vorrichtung zum Betreiben eines Fahrzeugs anzugeben.

Die der Erfindung zugrunde liegende Aufgabe kann ferner darin gesehen werden, ein Computerprogramm bereitzustellen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Fahrzeugs gemäss Anspruch 1 bereitgestellt.

Gemäß einem weiteren Aspekt wird eine Vorrichtung zum Betreiben eines Fahrzeugs gemäss Anspruch 6 bereitgestellt.

Gemäß einem anderen Aspekt wird ein Computerprogramm bereitgestellt, welches Programmcode zur Durchführung des Verfahrens zum Betreiben eines Fahrzeugs umfasst, wenn das Computerprogramm auf einem Computer ausgeführt wird.

Die Erfindung umfasst also insbesondere den Gedanken, den mittels der Lenkeinrichtung vorgegebenen Einschlaglenkwinkel automatisch zu korrigieren, wenn der durch die Lenkeinrichtung vorgegebene Einschlaglenkwinkel vom Fahrer des Fahrzeugs zu groß oder zu klein gewählt wurde und eine Kollision, zum Beispiel ein Auffahrunfall, ohne Eingriff die Folge wäre. Hier ist erfindungsgemäß vorgesehen, dass in einem solchen Fall der Einschlaglenkwinkel korrigiert wird. Dies basierend auf einem Vergleich zwischen der ermittelten Kollisionswahrscheinlichkeit und dem vorbestimmten Kollisionswahrscheinlichkeitsschwellwert. Dadurch wird insbesondere der technische Vorteil bewirkt, dass eine Kollision vermieden werden kann oder zumindest eine Unfallschwere im Fall einer Kollision verringert werden kann.

Nach einer Ausführungsform ist vorgesehen, dass die Lenkeinrichtung ein Lenkrad umfasst. Das heißt, dass der mittels des Lenkrads vorgegebene Einschlaglenkwinkel erfasst wird.

Nach einer Ausführungsform entspricht der Einschlagwinkel dem Einschlagwinkel für zwei Fahrzeugräder, die beispielsweise mittels einer gemeinsamen Achse verbunden sind. Das heißt, dass der Einschlaglenkwinkelfür zwei Fahrzeugräder erfasst wird.

Gemäß der Erfindung ist vorgesehen, dass der Einschlaglenkwinkel nur innerhalb einer mittels der Lenkeinrichtung vorgegebenen Einschlagrichtung korrigiert wird. Dadurch wird insbesondere der technische Vorteil bewirkt, dass abrupte Fahrtrichtungsänderungen aufgrund einer Änderung der Einschlagrichtung vermieden werden. Dies könnte beispielsweise zu einem Schleudern des Fahrzeugs führen. Aufgrund dieser Ausführungsform wird somit beispielsweise der technische Vorteil bewirkt, dass ein Schleudern des Fahrzeugs bei einer automatischen Korrektur vermieden oder zumindest verringert werden kann.

Gemäß der Erfindung ist vorgesehen, dass ermittelt wird, ob die vorgegebene Einschlagrichtung der Lenkeinrichtung auch bei (oder trotz) einer Korrektur des Einschlaglenkwinkels geändert werden muss, um die Kollision zu verhindern, und wobei, wenn ja, eine Warnung zum Ändern der Einschlagrichtung ausgegeben wird. Dadurch wird insbesondere der technische Vorteil bewirkt, dass der Fahrer Kenntnis erlangen kann, dass er die Einschlagrichtung der Lenkeinrichtung, insbesondere des Lenkrads, ändern muss, um eine Kollision zu verhindern. Die Warnung umfasst also eine Aufforderung zum Ändern der Einschlagrichtung.

Eine Einschlagrichtung im Sinne der vorliegenden Erfindung ist links oder rechts bezogen auf eine Fahrtrichtung des Fahrzeugs.

In einer weiteren Ausführungsform ist vorgesehen, dass basierend auf dem erfassten Einschlaglenkwinkel ein momentaner Zielkorridor des Fahrzeug ermittelt wird, wobei basierend auf dem erfassten Fahrzeugumfeld ermittelt wird, ob sich ein Objekt im dem momentanen Zielkorridor befindet, und wobei, wenn ja, eine Warnung ausgegeben wird. Dadurch wird insbesondere der technische Vorteil bewirkt, dass der Fahrer des Fahrzeugs Kenntnis darüber erlangt, dass sich im momentanen Zielkorridor ein Objekt befindet. Er kann somit seine Fahrweise entsprechend anpassen oder korrigieren. Dadurch kann in vorteilhafter Weise eine Kollision mit dem Objekt verhindert werden.

In einer anderen Ausführungsform ist vorgesehen, dass eine Kollisionszeit ermittelt wird, wobei bei einer Korrektur des Einschlaglenkwinkels eine Aufforderung zum Durchführen einer Notbremsung an ein Bremssystem des Fahrzeugs gesendet wird, wenn die ermittelte Kollisionszeit kleiner gleich einem vorbestimmten Kollisionszeitschwellwert ist. Dadurch wird insbesondere der technische Vorteil bewirkt, dass selbst im Fall einer Kollision eine Unfallschwere verringert werden kann. Denn aufgrund einer eingeleiteten Notbremsung wird eine Aufprallgeschwindigkeit oder Kollisionsgeschwindigkeit verringert, sodass das Fahrzeug mit einer verringerten Geschwindigkeit auf das Objekt trifft.

Ein Objekt im Sinne der vorliegenden Erfindung kann beispielsweise ein anderes Fahrzeug, eine Person oder ein Tier oder eine feststehende Infrastruktur sein.

Gemäß einer weiteren Ausführungsform ist vorgesehen, dass eine momentane Fahrzeuggeschwindigkeit erfasst wird und wobei bei einer Korrektur des Einschlaglenkwinkels ein Spurhalteassistenzsystem des Fahrzeugs deaktiviert wird, wenn die momentane Fahrzeuggeschwindigkeit größer gleich einem vorbestimmten Fahrzeuggeschwindigkeitsschwellwert ist.

In einer anderen Ausführungsform ist vorgesehen, dass bei einer Korrektur des Einschlaglenkwinkels eine Warnblinkanlage des Fahrzeugs zum Warnen von Verkehrsteilnehmern aktiviert wird. Dies insbesondere nur dann, wenn die momentane Fahrzeuggeschwindigkeit größer gleich einem vorbestimmten Fahrzeuggeschwindigkeitsschwellwert ist. Zum Beispiel beträgt dieser 20 km/h. Dadurch wird insbesondere der technische Vorteil bewirkt, dass weitere Verkehrsteilnehmer gewarnt werden, dass von dem Fahrzeug potenziell eine Kollisionsgefahr ausgeht. Die weiteren Verkehrsteilnehmer können somit in vorteilhafter Weise ihre Verhaltensweise entsprechend anpassen. Eine Sicherheit im Verkehr wird dadurch in vorteilhafter Weise erhöht.

Nach einer nicht beanspruchten Ausführungsform ist vorgesehen, dass die Erfassungseinrichtung einen oder mehrere Umfeldsensoren umfasst. Die mehreren Umfeldsensoren sind beispielsweise gleich oder vorzugsweise unterschiedlich gebildet. Ein Umfeldsensor ist beispielsweise ein Radarsensor, ein Ultraschallsensor, ein Lidar-Sensor oder ein Videosensor. Der Umfeldsensor ist beispielsweise als ein Abstandssensor oder als ein Parksensor ausgebildet. Beispielsweise handelt es sich bei dem Videosensor um einen Videosensor eines Kamerasystems. Insbesondere handelt es sich bei dem Radarsensor um einen Radarsensor eines Radarsystems. Das Radarsystem ist insbesondere ausgebildet, eine Abstandsbestimmung zu Objekten im Umfeld des Fahrzeugs durchzuführen.

Nach einer nicht beanspruchten Ausführungsform umfasst die weitere Erfassungseinrichtung einen Lenkradsensor zum Erfassen eines Einschlaglenkwinkels des Lenkrads des Fahrzeugs.

Nach einer nicht beanspruchten Ausführungsform umfasst das Bremssystem des Fahrzeugs ein Antiblockiersystem (ABS) und/oder ein Anti-Schlupf-System.

Ausführungsformen der Vorrichtung ergeben sich analog aus Ausführungsformen des Verfahrens und umgekehrt. Ausführungen, Merkmale und Vorteile hinsichtlich der Vorrichtung gelten analog für das Verfahren und umgekehrt.

Nach einer nicht beanspruchten Ausführungsform ist die Vorrichtung ausgebildet, das Verfahren durchzuführen.

Nach einer nicht beanspruchten Ausführungsform wird das Computerprogramm auf der Steuerungseinrichtung ausgeführt.

Die Formulierung "größer gleich" umfasst insbesondere den Fall "ausschließlich größer". Die Formulierung "kleiner gleich" umfasst insbesondere den Fall "ausschließlich kleiner".

Die Erfindung wird im Folgenden anhand von bevorzugten Ausführungsbeispielen näher erläutert. Hierbei zeigen
Fig. 1 ein Ablaufdiagramm eines Verfahrens zum Betreiben eines Fahrzeugs und
Fig. 2 eine Vorrichtung zum Betreiben eines Fahrzeugs.

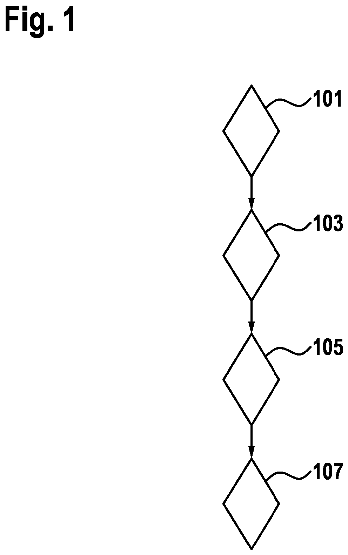

Fig. 1 zeigt ein Ablaufdiagramm eines Verfahrens zum Betreiben eines Fahrzeugs.

Gemäß einem Schritt 101 wird ein Fahrzeugumfeld erfasst. Dies beispielsweise mittels einer Umfeldsensorik des Fahrzeugs. Die Umfeldsensorik umfasst einen oder mehrere Umfeldsensoren.

In einem Schritt 103 wird ein mittels einer Lenkeinrichtung vorgegebener Einschlaglenkwinkel für ein Fahrzeugrad, zum Beispiel für zwei Fahrzeugräder, erfasst. Dies beispielsweise mittels eines Lenkradsensors. Das heißt, dass der Einschlaglenkwinkeldes Lenkrads erfasst wird.

In einem Schritt 105 wird eine Kollisionswahrscheinlichkeit für das Fahrzeug bei unverändertem Einschlaglenkwinkel basierend auf dem erfassten Fahrzeugumfeld und dem erfassten Einschlaglenkwinkelermittelt. Dies beispielsweise mittels einer Verarbeitungseinrichtung. Die Verarbeitungseinrichtung ermittelt beispielsweise eine Fahrzeugtrajektorie, die das Fahrzeug bei unverändertem Einschlaglenkwinkel fahren würde. Basierend auf dieser Fahrzeugtrajektorie und dem erfassten Fahrzeugumfeld wird beispielsweise die Kollisionswahrscheinlichkeit ermittelt.

In einem Schritt 107 wird der Einschlaglenkwinkel korrigiert, wenn die ermittelte Kollisionswahrscheinlichkeit größer gleich einem vorbestimmten Kollisionswahrscheinlichkeitsschwellwert ist, um eine Kollision zu verhindern. Dies beispielsweise mittels einer Steuereinrichtung. Das heißt, dass das Korrigieren des Einschlaglenkwinkels ein Steuern des Einschlaglenkwinkels umfasst.

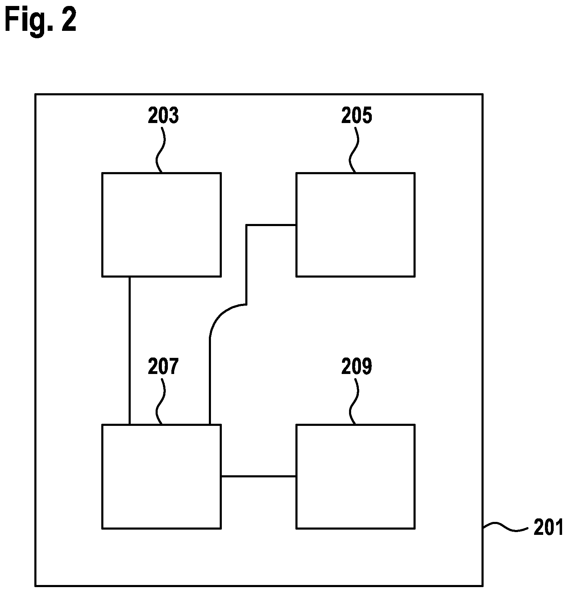

Fig. 2 zeigt eine Vorrichtung 201 zum Betreiben eines Fahrzeugs (nicht gezeigt).

Die Vorrichtung 201 umfasst eine Erfassungseinrichtung 203 zum Erfassen eines Fahrzeugumfelds. Die Erfassungseinrichtung umfasst beispielsweise einen oder mehrere Umfeldsensoren.

Die Vorrichtung 201 umfasst ferner eine weitere Erfassungseinrichtung 205 zum Erfassen eines mittels einer Lenkeinrichtung vorgegebenen Einschlaglenkwinkels für ein Fahrzeugrad, zum Beispiel für zwei Fahrzeugräder, insbesondere für mehrere Fahrzeugräder. Die weitere Erfassungseinrichtung 205 umfasst beispielsweise einen Lenkradsensor zum Erfassen eines Lenkradwinkels. Der Lenkradlenkwinkel gibt den Einschlaglenkwinkel vor.

Die Vorrichtung 201 umfasst ferner eine Verarbeitungseinrichtung 207 zum Ermitteln einer Kollisionswahrscheinlichkeit für das Fahrzeug bei unverändertem Einschlaglenkwinkel basierend auf dem erfassten Fahrzeugumfeld und dem erfassten Einschlaglenkwinkel.

Die Vorrichtung 201 umfasst des Weiteren eine Steuereinrichtung 209 zum Steuern des Einschlaglenkwinkels zum Korrigieren des Einschlaglenkwinkels, wenn die ermittelte Kollisionswahrscheinlichkeit größer gleich einem vorbestimmten Kollisionswahrscheinlichkeitsschwellwert ist, um eine Kollision zu verhindern.

Zum Steuern des Einschlaglenkwinkels ist die Steuereinrichtung beispielsweise mit einem oder mehreren Aktoren des Fahrzeugs in Wirkverbindung.

Die Erfindung umfasst also insbesondere den Gedanken, mittels eines oder mehreren Abstandssensoren und/oder mittels eines oder mehreren Radarsensoren und/oder mittels eines Kamerasystems eine Fahrzeugumgebung zu erfassen und einen Einschlaglenkwinkel von Fahrzeugrädern automatisch zu korrigieren, wenn der durch das Lenkrad vorgegebene Einschlaglenkwinkel vom Fahrer des Fahrzeugs zu groß oder zu klein gewählt wurde und eine Kollision, zum Beispiel ein Auffahrunfall, ohne einen Eingriff die Folge wäre. Durch das Lenkrad wird beispielsweise nur die Einschlagrichtung vorgegeben (links oder rechts bezogen auf eine Fahrtrichtung des Fahrzeugs). Der korrekte Einschlaglenkwinkel wird automatisch ermittelt, insbesondere mittels der Verarbeitungseinrichtung.

Beispielsweise ist nach einer Ausführungsform vorgesehen, dass eine Warnung an den Fahrer ausgegeben wird, wenn auch durch eine Korrektur (oder trotz einer Korrektur) des Einschlaglenkwinkels eine Kollision, zum Beispiel ein Auffahrunfall, die Folge wäre und deshalb die Einschlagrichtung geändert werden muss.

Beispielsweise ist nach einer Ausführungsform vorgesehen, dass ermittelt wird, ob sich im Zielkorridor des Fahrzeugs, insbesondere im unmittelbaren Zielkorridor des Fahrzeugs, etwas befindet und/oder bewegt (zum Beispiel ein anderes Fahrzeug, eine oder mehrere Personen, ein Tier oder mehrere Tiere oder eine feststehende Infrastruktur. Dies wird insbesondere dem Fahrer signalisiert.

In einer nicht gezeigten und nicht beanspruchten Ausführungsform ist vorgesehen, dass vor einer Kollision, insbesondere vor einem Auffahrunfall, an ein Antiblockiersystem gemeldet wird, dass eine Notbremsung eingeleitet werden muss. Das Antiblockiersystem leitet ansprechend auf diese Meldung die Notbremsung ein.

Nach einer weiteren nicht gezeigten Ausführungsform ist vorgesehen, dass ab einer vorbestimmten Fahrzeuggeschwindigkeit, zum Beispiel von mehr als 20 km/h, ein Spurhalteassistenzsystem des Fahrzeugs deaktiviert wird.

In noch einer anderen nicht gezeigten Ausführungsform ist vorgesehen, dass bei einer Korrektur des Einschlaglenkwinkels eine Warnblinkanlage des Fahrzeugs zum Warnen von Verkehrsteilnehmern aktiviert wird. Dies insbesondere nur dann, wenn die momentane Fahrzeuggeschwindigkeit größer gleich einem vorbestimmten Fahrzeuggeschwindigkeitsschwellwert ist. Zum Beispiel beträgt dieser 20 km/h.

Es wird also eine automatische Korrektur des Einschlaglenkwinkels vorgeschlagen. Hierbei ist insbesondere eine Vernetzung mit Abstandssensoren und/oder Parksensoren, eine Vernetzung mit einem Radarsystem (zur Abstandsbestimmung), eine Vernetzung mit einem Kamerasystem, eine Vernetzung mit einem Antiblockiersystem und eine Vernetzung mit einem Spurhalteassistenzsystem vorgesehen.

## Patentansprüche

1. Verfahren zum Betreiben eines Fahrzeugs, umfassend die folgenden Schritte:
- Erfassen (101) eines Fahrzeugumfelds,
- Erfassen (103) eines mittels einer Lenkeinrichtung vorgegebenen Einschlaglenkwinkels für ein Fahrzeugrad,
- Ermitteln (105) einer Kollisionswahrscheinlichkeit für das Fahrzeug bei unverändertem Einschlaglenkwinkel basierend auf dem erfassten Fahrzeugumfeld und dem erfassten Einschlaglenkwinkel,
- Korrigieren (107) des Einschlaglenkwinkels, wenn die ermittelte Kollisionswahrscheinlichkeit größer gleich einem vorbestimmten Kollisionswahrscheinlichkeitsschwellwert ist, um eine Kollision zu verhindern,
- wobei der Einschlaglenkwinkel nur innerhalb einer mittels der Lenkeinrichtung vorgegebenen Einschlagrichtung korrigiert wird,
- wobei ermittelt wird, ob die vorgegebene Einschlagrichtung der Lenkeinrichtung auch bei einer Korrektur des Einschlaglenkwinkels geändert werden muss, um die Kollision zu verhindern, und wobei, wenn ja, eine Warnung zum Ändern der Einschlagrichtung ausgegeben wird.

2. Verfahren nach einem der vorherigen Ansprüche, wobei basierend auf dem erfassten Einschlaglenkwinkel ein momentaner Zielkorridor des Fahrzeug ermittelt wird, wobei basierend auf dem erfassten Fahrzeugumfeld ermittelt wird, ob sich ein Objekt im dem momentanen Zielkorridor befindet, und wobei, wenn ja, eine Warnung ausgegeben wird.

3. Verfahren nach einem der vorherigen Ansprüche, wobei eine Kollisionszeit ermittelt wird und wobei bei einer Korrektur des Einschlaglenkwinkels eine Aufforderung zum Durchführen einer Notbremsung an ein Bremssystem des Fahrzeugs gesendet wird, wenn die ermittelte Kollisionszeit kleiner gleich einem vorbestimmten Kollisionszeitschwellwert ist.

4. Verfahren nach einem der vorherigen Ansprüche, wobei eine momentane Fahrzeuggeschwindigkeit erfasst wird und wobei bei einer Korrektur des Einschlaglenkwinkels ein Spurhalteassistenzsystem des Fahrzeugs deaktiviert wird, wenn die momentane Fahrzeuggeschwindigkeit größer gleich einem vorbestimmten Fahrzeuggeschwindigkeitsschwellwert ist.

5. Verfahren nach einem der vorherigen Ansprüche, wobei bei einer Korrektur des Einschlaglenkwinkels eine Warnblinkanlage des Fahrzeugs zum Warnen von Verkehrsteilnehmern aktiviert wird.

6. Vorrichtung (201) zum Betreiben eines Fahrzeugs, umfassend :
- eine Erfassungseinrichtung (203) mit Mitteln zum Erfassen eines Fahrzeugumfelds
- eine weitere Erfassungseinrichtung (205) mit Mitteln zum Erfassen eines mittels einer Lenkeinrichtung vorgegebenen Einschlaglenkwinkels für ein Fahrzeugrad,
- eine Verarbeitungseinrichtung (207) it Mitteln zum Ermitteln einer Kollisionswahrscheinlichkeit für das Fahrzeug bei unverändertem Einschlaglenkwinkel basierend auf dem erfassten Fahrzeugumfeld und dem erfassten Einschlaglenkwinkel und
- eine Steuereinrichtung (209) mit Mitteln zum Steuern des Einschlaglenkwinkels zum Korrigieren des Einschlaglenkwinkels, wenn die ermittelte Kollisionswahrscheinlichkeit größer gleich einem vorbestimmten Kollisionswahrscheinlichkeitsschwellwert ist, um eine Kollision zu verhindern,
- wobei der Einschlaglenkwinkel von der Steuereinrichtung nur innerhalb einer mittels der Lenkeinrichtung vorgegebenen Einschlagrichtung korrigiert wird,
- wobei von der Steuereinrichtung ermittelt wird, ob die vorgegebene Einschlagrichtung der Lenkeinrichtung auch bei einer Korrektur des Einschlaglenkwinkels geändert werden muss, um die Kollision zu verhindern, und wobei, wenn ja, eine Warnung zum Ändern der Einschlagrichtung ausgegeben wird.

7. Computerprogramm, umfassend Programmcode zur Durchführung des Verfahrens nach einem der Ansprüche 1 bis 5, wenn das Computerprogramm auf einem Computer ausgeführt wird.

## Claims

1. Method for operating a vehicle, comprising the following steps:
- sensing (101) the surroundings of the vehicle,
- detecting (103) a steering angle, specified by means of a steering device, for a vehicle wheel,
- determining (105) a collision probability for the vehicle when the steering angle is unchanged, on the basis of the sensed surroundings of the vehicle and the detected steering angle,
- correcting (107) the steering angle if the determined collision probability is greater than or equal to a predetermined collision probability threshold value, in order to prevent a collision,
- wherein the steering angle is corrected only within a steering direction which is specified by means of the steering device,
- wherein it is determined whether the specified steering direction of the steering device has to be changed even when the steering angle is corrected, in order to prevent the collision, and wherein, if this is the case, a warning to change the steering direction is output.

2. Method according to one of the preceding claims, wherein an instantaneous target corridor of the vehicle is determined on the basis of the detected steering angle, wherein, on the basis of the sensed surroundings of the vehicle, it is determined whether an object is located in the instantaneous target corridor, and wherein, if this is the case, a warning is output.

3. Method according to one of the preceding claims, wherein a collision time is determined, and wherein, when the steering angle is corrected, a request to carry out an emergency braking operation is transmitted to a brake system of the vehicle if the determined collision time is less than or equal to a predetermined collision time threshold value.

4. Method according to one of the preceding claims, wherein an instantaneous vehicle speed is sensed, and wherein, when the steering angle is corrected, a lane keeping assistance system of the vehicle is deactivated if the instantaneous vehicle speed is greater than or equal to a predetermined vehicle speed threshold value.

5. Method according to one of the preceding claims, wherein, when the steering angle is corrected, a flashing hazard warning light of the vehicle is activated in order to warn road users.

6. Device (201) for operating a vehicle, comprising:
- a sensing device (203) with means for sensing the surroundings of the vehicle,
- a detecting device (205) with means for detecting a steering angle, specified by means of a steering device, for a vehicle wheel,
- a processing device (207) with means for determining a collision probability for the vehicle when the steering angle is unchanged, on the basis of the sensed surroundings of the vehicle and the detected steering angle, and
- a control device (209) with means for controlling the steering angle in order to correct the steering angle if the determined collision probability of is greater than or equal to a predetermined collision probability threshold value, in order to prevent a collision,
- wherein the steering angle is corrected by the control device only within a steering direction which is specified by means of the steering device,
- wherein the control device determines whether the specified steering direction of the steering device has to be changed even when the steering angle is corrected, in order to prevent the collision, and wherein, if this is the case, a warning to change the steering direction is output.

7. Computer program comprising a program code for carrying out the method according to one of Claims 1 to 5 when the computer program is run on a computer.

## Revendications

1. Procédé de conduite d'un véhicule, ledit procédé comprenant les étapes suivantes :
- détecter (101) un environnement de véhicule,
- détecter (103) un angle de braquage d'une roue de véhicule qui est spécifié à l'aide d'un organe de direction,
- déterminer (105) une probabilité de collision du véhicule pour un angle de braquage inchangé sur la base de l'environnement de véhicule détecté et de l'angle de braquage détecté,
- corriger (107) l'angle de braquage si la probabilité de collision déterminée est supérieure ou égale à une valeur seuil de probabilité de collision prédéterminée afin d'éviter une collision,
- l'angle de braquage n'étant corrigé que dans une direction de braquage spécifiée à l'aide de l'organe de direction,
- une détermination étant effectuée quant à la nécessité de modifier également la direction de braquage spécifiée de l'organe de direction lorsque l'angle de braquage est corrigé afin d'empêcher la collision, et si tel est le cas, un avertissement de changement de direction de braquage étant délivré.

2. Procédé selon l'une des revendications précédentes, un couloir cible actuel du véhicule étant déterminé sur la base de l'angle de braquage détecté, une détermination étant effectuée sur la base de l'environnement de véhicule détecté quant à la présence d'un objet dans le couloir cible actuel et, si tel est le cas, un avertissement étant délivré.

3. Procédé selon l'une des revendications précédentes, un temps de collision étant déterminé et, lorsque l'angle de braquage est corrigé, une demande de freinage d'urgence est envoyée à un système de freinage du véhicule si le temps de collision déterminé est inférieur ou égal à une valeur seuil de temps de collision prédéterminé.

4. Procédé selon l'une des revendications précédentes, une vitesse de véhicule actuelle étant détectée et, lorsque l'angle de braquage est corrigé, un système d'assistance de tenue de route du véhicule est désactivé si la vitesse de véhicule actuelle est supérieure ou égale à une valeur seuil de vitesse de véhicule prédéterminée.

5. Procédé selon l'une des revendications précédentes, les feux de détresse du véhicule étant activés pour avertir les usagers de la route lorsque l'angle de braquage est corrigé.

6. Dispositif (201) de conduite d'un véhicule, ledit dispositif comprenant :
- un organe de détection (203) comprenant des moyens de détection d'environnement du véhicule,
- un autre organe de détection (205) comprenant des moyens de détection d'un angle de braquage d'une roue de véhicule qui est spécifié à l'aide d'un organe de direction,
- un organe de traitement (207) comprenant des moyens de détermination d'une probabilité de collision du véhicule pour un angle de braquage inchangé sur la base de l'environnement de véhicule détecté et de l'angle de braquage détecté et
- un organe de commande (209) comprenant des moyens de commande de l'angle de braquage pour corriger l'angle de braquage si la probabilité de collision déterminée est supérieure ou égale à une valeur seuil de probabilité de collision prédéterminée afin d'éviter une collision,
- l'angle de braquage n'étant corrigé par l'organe de commande que dans une direction de braquage spécifiée par l'organe de direction,
- l'organe de commande déterminant si la direction de braquage spécifiée de l'organe de direction doit également être modifiée lorsque l'angle de braquage est corrigé afin d'éviter la collision et, si tel est le cas, un avertissement de modification de direction de braquage étant délivré.

7. Logiciel comprenant un code de programme destiné à mettre en œuvre le procédé selon l'une des revendications 1 à 5, lorsque le logiciel est exécuté sur un ordinateur.
